(19) Europäisches Patentamt
European Patent Office
Office européen des brevets

(11) **EP 1 990 122 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(51) Int Cl.:
***B23K 11/25*** *(2006.01)*

(21) Anmeldenummer: **07107647.5**

(22) Anmeldetag: **07.05.2007**

(54) **Verfahren zum Steuern einer Elektroden-Anpresskraft bei einer Schweißzange sowie entsprechende Schweißzange**

Method for operating an electrode pressure unit for a welding clamp and corresponding welding clamp

Procédé destiné à la commande d'une force de pression à électrodes pour une pince à souder tout comme pince à souder correspondante

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**12.11.2008 Patentblatt 2008/46**

(60) Teilanmeldung:
**09165420.2 / 2 105 237**

(73) Patentinhaber: **Nimak GmbH**
**57537 Wissen (DE)**

(72) Erfinder: **Nickel, Paul**
**57537 Wissen (DE)**

(74) Vertreter: **Patentanwälte**
**Dr. Solf & Zapf**
**Hauptstrasse 97**
**51465 Bergisch-Gladbach (DE)**

(56) Entgegenhaltungen:
**EP-A1- 1 428 608    EP-A2- 1 005 943**
**WO-A-00/71291    WO-A-03/008146**
**JP-A- 11 090 642**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft gemäß dem Oberbegriff des Patentanspruchs 1 ein Verfahren zum Kalibrieren eines elektromotorischen Elektroden-Antriebs einer Schweißzange zwecks Einmessen einer Elektrodenarm-Geometrie, wobei zunächst die Elektrodenarme mit ihren Schweißelektroden in eine Schließposition zusammen gefahren und mit einem bestimmten Kalibriermoment beaufschlagt werden und die Schließposition anhand von Steuersignalen des elektromotorischen Antriebs gespeichert wird, und wobei anschließend die Elektrodenarme in eine bestimmte Referenzposition gefahren werden, in der die Elektroden unter Beaufschlagung mit dem Kalibriermoment in einem definierten Elektrodenabstand voneinander stehen, wobei durch Relation der Antriebs-Steuersignale der Referenzposition relativ zur Schließposition ein Verhältnis der Steuersignale bezogen auf den Elektrodenweg ermittelt wird.

Das Dokument EP 1 005 943 A2 beschreibt eine Schweißzange mit einem elektromotorischen Servoantrieb für eine Schweißelektrode und mit einem Encoder als Positionssensor. Hierbei sind auch bestimmte Kalibrier-Routinen für Referenzpositionen und Anpresskraft der Schweißelektrode beschrieben,

Ein Kalibrieren eines elektromotorischen Elektroden-Antriebs hat besondere Bedeutung im Zusammenhang mit einem in dem Dokument EP 1 428 608 A1 beschriebenen Verfahren zum Steuern einer Werkzeug-Anpresskraft bei einer Schweißzange. Auch bei diesem bekannten Verfahren wird ein elektrischer bzw. elektromotorischer Antrieb verwendet, um einerseits die Arbeitselektrode über einen Arbeitshub gegen ein Werkstück zu bewegen und andererseits auch anschließend bei Werkstück-Kontakt mit der jeweils erforderlichen Anpresskraft zu beaufschlagen, indem durch einen bestimmten Arbeitsstrom ein bestimmtes Antriebsmoment vorgegeben wird. Das bekannte Verfahren hat sich bislang in der Praxis gut bewährt, weil es stets und auch weitgehend unabhängig von wechselnden Betriebsbedingungen (wie insbesondere unterschiedlichen Umgebungstemperaturen, die in der Regel zu Änderungen von Reibwerten im System und zu Viskositätsänderungen von Schmiermitteln führen) eine hohe Fügequalität und Prozesssicherheit gewährleistet. In einer bevorzugten Variante des bekannten Verfahrens wird zunächst einmalig eine gewünschte Soll-Anpresskraft der Arbeitselektrode festgelegt, und es wird mit geeigneten Mitteln ein dazu erforderlicher Arbeitsstrom für den elektrischen Antrieb ermittelt. Etwa zeitgleich dazu, also unmittelbar zeitlich davor oder danach und dadurch praktisch bei den gleichen Betriebsbedingungen, wird ein bestimmter Fahrstrom des elektrischen Antriebs für eine einmal festgelegte, eigentlich beliebige, aber jedenfalls konstante Fahrgeschwindigkeit für die Hubbewegung, insbesondere für den eigentlichen Arbeitshub, ermittelt. Nachfolgend wird bei späteren Hubbewegungen, insbesondere in jedem späteren Arbeitshub, die tatsächliche Fahrgeschwindigkeit überwacht und erforderlichenfalls, wenn die Ist-Geschwindigkeit von der zuvor ermittelten konstanten Fahrgeschwindigkeit abweicht, durch eine entsprechende Änderung des Fahrstroms wieder auf die konstante Fahrgeschwindigkeit gebracht. Dies bedeutet, dass die Fahrgeschwindigkeit durch Anpassung des Fahrstroms und des daraus resultierenden Antriebsmomentes konstant gehalten wird, wobei die dazu erforderliche Stromänderung ermittelt wird. Wenn dann anschließend die Arbeitselektrode zum Anlagekontakt am jeweiligen Werkstück kommt, so wird in Abhängigkeit von der zuvor ermittelten Stromänderung auch der Arbeitsstrom in einem entsprechenden Verhältnis geändert, wodurch dann die daraus resultierende Anpresskraft dem Sollwert entspricht. Somit erfolgt die Kraftsteuerung durch konstant halten der Fahrgeschwindigkeit und Ermittlung einer dafür notwendigen Stromänderung, wobei dann im Verhältnis der Fahrstromänderung auch der Arbeitsstrom geändert wird. Dadurch wird eine - z.B. reibungsbedingte - Schwergängigkeit im System selbsttätig durch eine Erhöhung des Antriebsmomentes so kompensiert, dass die gewünschte, effektive Soll-Anpresskraft stets konstant bleibt.

In der Praxis tritt nun aber noch eine weitere Schwierigkeit auf, und zwar können häufig - bedingt durch ungenau gefertigte Teile - im Schweißbereich zwischen den zu verschweißenden Werkstück-Teilen (Blechen) Luftspalte vorhanden sein. In diesem Fall liegen die Teile im Schweißbereich nicht aneinander, so dass es beim Schweißen zu einer so genannten Spritzerbildung und vielfach sogar zu "losen" Schweißpunkten kommen kann. Für eine hinreichende Qualität und Haltbarkeit der Schweißpunkte wäre es deshalb erforderlich, den jeweiligen Luftspalt vor dem Schweißprozess zu verfügen. Bekannte Roboter-Schweisszangen sind dazu nur durch eine generelle Erhöhung der Soll-Anpresskraft in der Lage. Dies gilt nicht nur für elektromotorische, sondern auch für pneumatische Zangensysteme. Eine solche generelle Krafterhöhung kann aber ebenfalls zu Fehlschweißungen führen, sofern nämlich an dem jeweiligen Schweißpunkt einmal kein Luftspalt vorhanden ist, weil in diesem Fall die Anpresskraft für den Schweißvorgang eigentlich zu hoch ist.

Der vorliegenden Erfindung liegt die Aufgabe zu Grunde, ein Kalibrier-Verfahren entsprechend dem Oberbegriff des Anspruchs 1 hinsichtlich der Genauigkeit weiter zu verbessern.

Erfindungsgemäß wird dies durch die Merkmale des unabhängigen Anspruchs 1 erreicht. Vorteilhafte Ausgestaltungen sind in den abhängigen Ansprüchen enthalten.

Durch die Erfindung ist es möglich, die Schweisszange beziehungsweise deren Steuerung und Antrieb bezüglich der jeweiligen Zangengeometrie genau zu kalibrieren, um den jeweiligen Istwert des Elektrodenabstandes feststellen und mit einer vorgegebenen Werkstückdicke vergleichen zu können.

Anhand der Zeichnungen soll im Folgenden die Erfindung beispielhaft genauer erläutert werden. Es zeigen:

Fig. 1 bis 4      stark schematische Seitenansichten von Schweißelektroden in verschiedenen Situationen während einer Kalibrierung des Elektrodenantriebes beziehungsweise einer Antriebssteuerung,

Fig.5            eine Schnittansicht eines Werkstückes mit zwei ohne Luftspalt aneinander liegenden, zu verschweißenden Werkstückteilen,

Fig. 6 bis 8     schematische Ansichten eines Schweißvorganges mit Verfügen eines Werkstück- Luftspaltes.

In den Zeichnungsfiguren sind von einer Schweißzange lediglich zwei Schweißelektroden vereinfacht dargestellt, und zwar eine Arbeitselektrode 2 und eine Gegenelektrode 4. Die Elektroden 2, 4 sind an nicht dargestellten zangenartigen Elektrodenarmen befestigt, wobei zumindest die Arbeitselektrode 2 über ihren Elektrodenarm mittels eines elektromotorischen Antriebs (ebenfalls nicht dargestellt) antreibbar und mit einer Anpresskraft beaufschlagbar ist. Als Antrieb kann ein Elektro-Linearmotor verwendet werden, wobei es sich um einen Rotationsmotor mit nachgeschalteten Antriebsmitteln handeln kann, die die Rotationsbewegungen des Motors in lineare Antriebsbewegungen des Elektrodenarms der Arbeitselektrode 2 umsetzen. Als Antriebsmittel ist z.B. ein Spindeltrieb geeignet. Der Motor ist zweckmäßig als Servomotor ausgeführt, der im Zusammenwirken mit einer Steuerung (Regelung) vorgebbare Positionen anfahren und beibehalten kann. Zudem wirkt der Motor mit einer Messeinrichtung zusammen, die die jeweils aktuelle Position (z.B. den Drehwinkel bezogen auf eine Anfangsposition) bestimmt. Diese Messung erfolgt über einen Drehgeber, insbesondere über einen Resolver anhand von Messimpulsen, die in einem Zähler gezählt werden. Der Motor wird über einen Umsetzer betrieben. Beispielsweise kann die Steuerung so ausgelegt sein, dass der Resolver pro Motorumdrehung eine bestimmte Anzahl (z.B. 4096) Impulse erzeugt, die im Umsetzer noch erhöht werden können (z.B. auf 8000 Messimpulse pro Motorumdrehung). Die Steuerung kann dadurch eine Motorumdrehung durch zählen von zum Beispiel 8000 Messimpulsen feststellen.

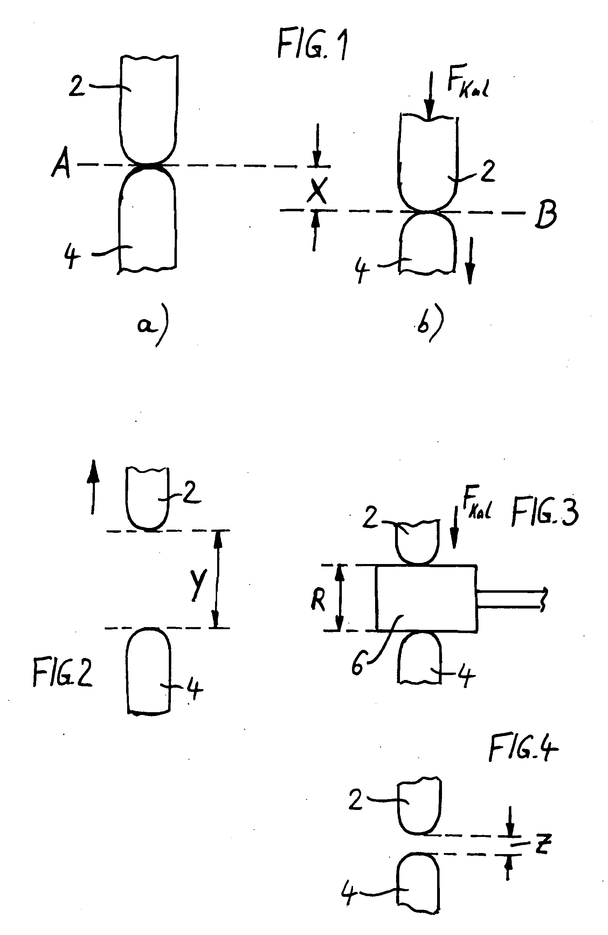

Weiterhin ergibt sich ein Verhältnis zwischen der Motorumdrehung und dem Hubweg der Arbeitselektrode 2, wobei dieses Verhältnis von der jeweiligen Zangengeometrie abhängt. Um über das Zählen der Messimpulse auf den Hubweg der Arbeitselektrode 2 schließen zu können, muss demnach eine Kalibrierung des Antriebs und der Steuerung erfolgen. Dies wird nun anhand der Fig. 1 bis 4 erläutert.

Schritt 1: In einem ersten Schritt des Kalibrierverfahrens wird die Zange geschlossen, bis die Arbeitselektrode 2 zum Anlagekontakt an der Gegenelektrode 4 gelangt (Position A in Fig. 1a). Die Arbeitselektrode 2 wird dabei durch Beaufschlagen des Antriebs mit einem bestimmten Arbeitsstrom und -moment mit einer bestimmten Anpresskraft (Kalibrierkraft $F_{kal}$ ) beaufschlagt, wodurch sich aufgrund einer systemeigenen Durchbiegung eine Position B gemäß Fig. 1b ergibt. Das Maß der Durchbiegung ist in Fig. 1 mit X eingezeichnet. Die Steuerung ordnet der Position B den aktuell vorliegenden Zählerstand der Messimpulse zu (z.B. 100.000).

Schritt 2: Gemäß Fig. 2 wird in einem zweiten Schritt die Zange geöffnet, und zwar bevorzugt bis zu einer maximalen Öffnungsposition Y. Der Sinn dieser bevorzugten Maßnahme wird im Folgenden noch erläutert werden. Die Steuerung erfasst die Öffnungsposition Y durch die jeweilige Anzahl der Messimpulse (z.B. 200.000).

Schritt 3: In einem dritten Schritt wird gemäß Fig. 3 die Zange auf ein bestimmtes Referenzmaß R (z.B. 50 mm) geschlossen, indem die Arbeitselektrode 2 gegen einen Referenzkörper 6 gefahren und durch ein bestimmtes Soll-Antriebsmoment mit der Kalibrierkraft $F_{kal}$ beaufschlagt wird. Dadurch tritt hierbei die entsprechende Durchbiegung X gemäß Fig. 1 ebenfalls auf. Die Steuerung erfasst diese Position R über die Zahl der Messimpulse (z.B. 120.000) und kann dann das Verhältnis V zwischen Anzahl von Messimpulsen und Elektrodenweg feststellen, und zwar durch die Differenz zwischen den Messimpulsen $i_R$ und $i_B$ in den Positionen R (Fig. 3) und B (Fig. 1b) bezogen auf das Maß R. Folglich ergibt sich das Verhältnis V aus:

$$V = (i_R - i_B)/R$$

Mit den lediglich beispielhaft in Klammern angegebenen und nicht unbedingt realistischen Angaben ergibt sich das Verhältnis aus:

$$V = (120.000 - 100.000)/50 \text{ mm} = 400 \text{ Impulse/mm}.$$

Da nun bei beiden Positionen B gemäß Fig. 1b und R gemäß Fig. 3 die Zangenspezifische Durchbiegung X auftritt, würde bei der Positionsbestimmung der Arbeitselektrode 2 in einer unbelasteten Elektroden-Stellung, wie sie in Fig. 4 dargestellt ist, ein Fehler auftreten, der der Differenz X zwischen den Positionen A und B in Fig. 1 entspricht. Beispiel: Bei Erreichen der Position B gemäß Fig. 1b wird die Istposition auf 0 mm gesetzt. In einer unbelasteten Öffnungsstellung gemäß Fig. 4 wird zum Beispiel 4 mm gemessen, aber 9 mm angezeigt. Die Differenz beträgt demnach 5 mm. Diese Differenz von 5 mm beschreibt den Grad der Durchbiegung, also die Differenz zwischen den Positionen A und B in Fig. 1. Damit die Steuerung nun für das erfindungsgemäße Verfahren zum Steuern der Anpresskraft stets die korrekte Position der Antriebselektrode 2 erfassen kann, wird bei der Kalibrierung erfindungsgemäß noch der folgende zusätzliche Schritt durchgeführt.

<u>Schritt 4:</u> Die Zange wird - ohne Anpresskraft, d.h. im Leerlauf - gemäß Fig. 4 auf ein eigentlich beliebiges Öffnungsmaß Z (zum Beispiel im Bereich von 5 bis 10 mm) gefahren. Dieses Maß Z wird dann genau gemessen, z.B. mittels einer Schieblehre (z.B. 6 mm). Die Steuerung erkennt in dieser Position über die Messimpulse allerdings eine Strecke, die größer als Z ist, weil beim Öffnen aus der mit der Anpresskraft belasteten Schließposition erst die Durchbiegung X gemäß Fig. 1 aufgehoben wird, bevor die Elektroden 2,4 tatsächlich getrennt werden. Folglich entspricht die Zahl der Messimpulse in der Position gemäß Fig. 4 der Summe Z+X, von der nun der exakt gemessene Abstand Z subtrahiert wird. Die resultierende Differenz wird der Steuerung als Parameter für die Durchbiegung X eingegeben. Damit ist die Kalibrierung abgeschlossen.

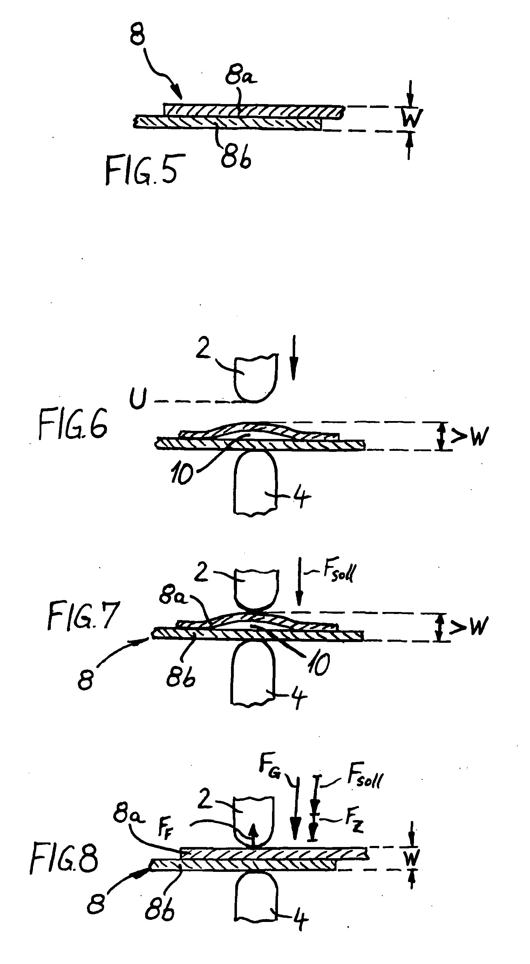

Das erfindungsgemäße Kalibrier-Verfahren angewandt werden, wie es in dem Dokument EP 1 428 608 B1 beschrieben ist. Dazu wird zum Steuern der Elektroden-Anpresskraft während des eigentlichen Schweißvorganges kann in Verbindung mit einem besonderen Verfahren gemäß Fig. 5 - als weitere vorbereitende Maßnahme - für ein aus zwei Werkstückteilen 8a und 8b bestehende Werkstück 8 dessen Werkstückdicke W gemessen, wenn die Teile 8a und 8b im Schweißbereich direkt, ohne Luftspalt aneinander liegen. Die Werkstückdicke W wird dann ebenfalls der Steuerung vorgegeben und nachfolgend in der Steuerung berücksichtigt.

Was nun das bevorzugte Verfahren zum Steuern der Elektroden-Anpresskraft gemäß EP 1 428 608 B1 betrifft, so wird zunächst einmalig eine Soll-Anpresskraft $F_{soll}$ für den jeweiligen Schweißvorgang als optimal festgelegt. Es wird dann mit geeigneten Mitteln ein dazu erforderlicher Arbeitsstrom für den elektrischen Antrieb ermittelt, wobei dieser Arbeitsstrom ein bestimmtes Antriebsmoment erzeugt. Etwa zeitgleich dazu wird ein bestimmter Fahrstrom des elektrischen Antriebs für eine einmal festgelegte, eigentlich beliebige, aber jedenfalls konstante Fahrgeschwindigkeit für die Hubbewegung ermittelt. Nachfolgend wird bei späteren Hubbewegungen, insbesondere bei der Schließbewegung in jedem späteren Arbeitshub, die tatsächliche Fahrgeschwindigkeit überwacht und erforderlichenfalls, d. h. wenn - z.B. durch veränderte Reibungsverhältnisse im System - die Ist-Geschwindigkeit von der zuvor ermittelten konstanten Fahrgeschwindigkeit abweicht, durch eine entsprechende Änderung des Fahrstroms wieder auf die konstante Fahrgeschwindigkeit gebracht. Diese Bewegung dient somit als Referenzfahrt, um diejenige Änderung des Fahrstroms zu ermitteln, die erforderlich ist, um die Fahrgeschwindigkeit konstant zu halten. Wenn dann bei der Schließbewegung die Arbeitselektrode 2 zum Anlagekontakt am jeweiligen Werkstück kommt, so wird in Abhängigkeit von der zuvor ermittelten Stromänderung auch der Arbeitsstrom in einem entsprechenden Verhältnis geändert. Die daraus resultierende Anpresskraft entspricht dann - trotz der veränderten System-Verhältnisse - dem Sollwert $F_{soll}$.

Anhand der Fig. 6 bis 8 wird jetzt der eigentliche Schweißvorgang beschrieben.

Gemäß Fig. 6 wird die Arbeitselektrode 2 im Arbeitshub in Schließrichtung mit der vorgegebenen Fahrgeschwindigkeit bewegt. In einer bestimmten Position U erfolgt vorzugsweise eine Aktivierung der beschriebenen Kraftregelung. Trifft dann gemäß Fig. 7 die Arbeitselektrode 2 auf das Werkstück 8 beziehungsweise auf das Werkstückteil 8a, so erkennt die Steuerung, dass bei Erhöhung des Antriebsmomentes der aktuelle Elektrodenabstand noch größer als die vorgegebene Werkstückdicke W ist, wenn im Schweißbereich ein Luftspalt 10 vorhanden ist. Deshalb detektiert die Steuerung lediglich eine "Schwergängigkeit", die einer von dem Bauteil 8a bewirkten Federkraft $F_F$ entspricht. Die Steuerung erhöht deshalb selbsttätig den Wert der vorgegebenen Soll-Anpresskraft $F_{soll}$ um eine Zusatzkraft $F_Z$, so dass gemäß Fig. 8 der Luftspalt 10 durch Zusammenpressen der Teile 8a und 8b verfügt wird. Wenn die Steuerung dann erkennt, dass der Elektrodenabstand der vorgegebenen Werkstückdicke W entspricht, wird der Schweißvorgang ausgelöst, wobei dann die tatsächliche Gesamt-Anpresskraft $F_G$ der Summe von Soll-Anpresskraft $F_{soll}$ plus Zusatzkraft $F_Z$ entspricht. Die Zusatzkraft $F_Z$ wirkt aber lediglich gegen die Bauteil-Federkraft $F_F$, so dass sich diese Kraftanteile gegenseitig aufheben. Das Werkstück 8 wird für den Schweißvorgang effektiv nur genau mit der vorgegebenen Soll-Anpresskraft $F_{soll}$ beaufschlagt.

Wenn - abweichend von dem beschriebenen Anwendungsfall - im Schweißbereich kein Luftspalt 10 vorhanden ist, so erkennt die Steuerung dies, wenn bei Erhöhung des Antriebsmomentes auf den für die Soll-Anpresskraft $F_{soll}$ erforderlichen Wert der Elektrodenabstand der vorgegebenen Werkstückdicke W entspricht. Es wird dann unmittelbar der Schweißvorgang ausgelöst.

Zu dem oben beschriebenen "Schritt 2" des Kalibrierverfahrens ist noch zu bemerken, dass es sich um eine optionale, aber vorteilhafte Maßnahme handelt. Im "Schritt 1" wird praktisch der Schließkontakt der Elektroden 2, 4 als "Nullpunkt" gesetzt. Damit ist aber noch keine Aussage über den Zusammenhang zwischen Messimpulsen und Elektroden-Wegstrecke gegeben, sondern es ist nur ein Startwert für das Zählen der Impulse vorgegeben. Mit dem bevorzugten "Schritt 2" wird dann die mechanische Endlage der jeweiligen Schweißzange ermittelt. Grundsätzlich könnte auch sofort vom "Schritt 1" auf das Referenzmaß R gemäß "Schritt 3" gefahren werden, um den Zusammenhang zwischen Messimpulsen und Wegstrecke zu bestimmen. Nach der daraus resultierenden Berechnung könnte der maximale Hub der Zange berechnet werden. Ein berechneter Wert würde aber auf Grund von mechanischen Toleranzen und - im Falle einer X-Zange - auf Grund einer Bewegung gemäß einem Bogenmaß nie dem tatsächlichen mechanischen Anschlag entsprechen. Diese Position (z. B. 200.000 Impulse) ändert sich aber auf Grund der Mechanik nie. Deshalb wird vorzugsweise diese Position als Referenzpunkt gesetzt ("Schritt 2"). Bei einem Spannungsabfall oder sonstigem Verlust der Istposition kann mittels einer Referenzfahrt die Zange auf den mechanischen Anschlag gefahren werden. Dort wird die gespeicherte Position aus dem "Schritt 2" als Istposition gesetzt. Im Gegensatz zu einer manuell durchgeführten Kalibrierung kann dieses Referenzieren auch im Automatikbetrieb durchgeführt werden.

Abschließend sei noch erwähnt, dass eine erfindungsgemäße Schweißzange eine Steuerung zur Durchführung der beschriebenen Verfahren aufweist. Dazu sind geeignete Mittel zur Eingabe und zum Speichern der bestimmten Werkstückdicke W und des gemäß Fig. 4 gemessenen Elektrodenabstandes Z sowie Mittel zur exakten Positionsbestimmung der Arbeitselektrode 2 vorgesehen. Weiterhin sind eine Einrichtung zum Messen der Fahrgeschwindigkeit der Arbeitselektrode 2 während der Hubbewegung, eine Einrichtung zum Messen des elektrischen Stroms des elektrischen Antriebs, Speichermittel zum Speichern von Änderungen des Stroms gegenüber einem zu einer beliebig festgelegten Soll-Fahrgeschwindigkeit der Hubbewegung gehörigen Fahrstrom sowie eine Auswerteeinheit zur Anpassung des Arbeitsstromes in Abhängigkeit von den gespeicherten Änderungen vorgesehen.

**Patentansprüche**

1. Verfahren zum Kalibrieren eines elektromotorischen Elektroden-Antriebs einer Schweißzange zwecks Einmessen einer Elektrodenarm-Geometrie, wobei zunächst die Elektrodenarme mit ihren Schweißelektroden (2,4) in eine Schließposition (B) zusammen gefahren und mit einem bestimmten Kalibriermoment beaufschlagt werden und die Schließposition (B) anhand von Steuersignalen des elektromotorischen Antriebs gespeichert wird, und wobei anschließend die Elektrodenarme in eine bestimmte Referenzposition (R) gefahren werden, in der die Elektroden (2,4) unter Beaufschlagung mit dem Kalibriermoment in einem definierten Elektrodenabstand (R) voneinander stehen, wobei durch Relation der Antriebs-Steuersignale der Referenzposition (R) relativ zur Schließposition (B) ein Verhältnis (V) der Steuersignale bezogen auf den Elektrodenweg ermittelt wird.
   **dadurch gekennzeichnet, dass** zusätzlich eine Zangenspezifische Durchbiegung unter Belastung mit dem Kalibriermoment ermittelt und zur Elektroden-Positionsbestimmung berücksichtigt wird.

2. Verfahren nach Anspruch 1,
   **dadurch gekennzeichnet, dass** zur Ermittlung der Durchbiegung der Elektrodenabstand (Z) in einer unbelasteten Elektrodenposition gemessen und zur Anpassung der Steuersignale berücksichtigt wird.

3. Verfahren nach Anspruch 1 oder 2,
   **dadurch gekennzeichnet, dass** zusätzlich eine Werkstückdicke (W) als Gesamtdicke von zwei direkt, ohne Luftspalt aufeinander liegenden Werkstückteilen (8a,8b) ermittelt und vorgegeben wird.

4. Verfahren nach einem der Ansprüche 1 bis 3,
   **gekennzeichnet durch** die Verwendung einer Schweißzange zum Herstellen von Punktschweißverbindungen an Werkstücken (8), mit einer Arbeitselektrode (2) und einer Gegenelektrode (4), wobei die Arbeitselektrode (2) über einen Arbeitshub in Richtung der Gegenelektrode (4) und gegen ein Werkstück (8) bewegbar und bei Werkstück-Kontakt mit einer Soll-Anpresskraft ($F_{soll}$) beaufschlagbar ist, wobei zum Antrieb der Arbeitselektrode (2) sowie zum Beaufschlagen mit der Anpresskraft ein elektrischer Antrieb vorgesehen ist, wobei Mittel zur Eingabe und zum Speichern einer vorbestimmten Werkstückdicke (W) und eines in einem unbelasteten Zustand gemessenen Elektrodenabstandes (Z) sowie Mittel zur exakten Positionsbestimmung der Arbeitselektrode (2) vorgesehen sind.

5. Verfahren nach Anspruch 4,
   **dadurch gekennzeichnet, dass** die verwendete Schweißzange eine Steuerung aufweist mit einer Einrichtung zum Messen der Fahrgeschwindigkeit der Arbeitselektrode (2) während der Hubbewegung, einer Einrichtung zum Messen des elektrischen Stroms des elektrischen Antriebs, Speichermitteln zum Speichern von Änderungen des Stroms gegenüber einem zu einer beliebig festgelegten Soll-Fahrgeschwindigkeit der Hubbewegung gehörigen Fahrstrom sowie einer Auswerteeinheit zur Anpassung des Arbeitsstroms in Abhängigkeit von den gespeicherten Änderungen.

**Claims**

1. A method for calibrating an electrode drive, driven by electric motor, of a welding tong set, for the purpose of measuring an electrode arm geometry, in which first the electrode arms, with their welding electrodes (2, 4), are brought together into a closed position (B) and are acted upon by a certain moment of calibration and the closing position (B) is stored by way of control signals from the drive driven by electric motor, and in which thereafter the electrode arms are moved into a certain reference position (R) in which the electrodes (2, 4) are put at a defined electrode spacing (R) from one another under the action of the moment of calibration, in which, from the relationship between the drive control signals of the reference position (R) and the closing position (B), a ratio (V) between the control signals relative to the electrode path is determined, **characterised in that** in addition a flexing under the load of the moment of calibration, specific to the tongs, is determined and is taken into account in determining the electrode position.

2. A method according to Claim 1, **characterised in that**, for determining the flexing, the spacing (Z) between the electrodes is measured in an unloaded position of the electrodes and is taken into account for adapting the control signals.

3. A method according to Claim 1 or 2, **characterised in that** in addition a workpiece thickness (W) is determined and pre-specified as the overall thickness of two workpieces (8a, 8b) lying directly on top of one another, without an air gap.

4. A method according to one of Claims 1 to 3, **characterised by** the use of a welding tong set for producing spot weld connections on workpieces (8), having a working electrode (2) and a counter-electrode (4), in which the working electrode (2) may be moved by way of a working stroke in the direction of the counter-electrode (4) and against a workpiece (8) and, when there is contact with the workpiece, may be acted upon by a contact pressure force of a set value ($F_{soll}$), in which there is provided for driving the working electrode (2) and for acting thereon with the contact pressure force an electrical drive, in which means for inputting and storing a predetermined workpiece thickness (W) and an electrode spacing (Z), which is measured in the unloaded condition, and means for precisely determining the position of the working electrode (2) are provided.

5. A method according to Claim 4, **characterised in that** the welding tong set used includes a control, having a means of measuring the speed of travel of the working electrode (2) during the stroke movement, a means of measuring the electrical current of the electrical drive, storage means for storing changes in the current by comparison with a travel current which is associated with a speed of travel of the stroke movement of a set value, which may be determined as desired, and an evaluating unit for adapting the working current as a function of the stored changes.

**Revendications**

1. Procédé pour calibrer un entraînement d'électrode par moteur électrique d'une pince à souder pour intégrer une géométrie de bras d'électrode dans les mesures, dans lequel les bras d'électrode sont déplacés d'abord ensemble avec leurs électrodes de soudage (2, 4) dans une position de fermeture (B) et sont sollicités avec un couple de calibrage défini et la position de fermeture (B) est mémorisée à l'aide de signaux de commande de l'entraînement par moteur électrique, et dans lequel les bras d'électrode sont déplacés ensuite dans une position de référence (R) définie, dans laquelle les électrodes (2, 4) sont disposées sous l'effet de la sollicitation avec le couple de calibrage à un espacement d'électrodes défini (R) les unes par rapport aux autres, un rapport (V) entre les signaux de commande étant déterminé par rapport à la course d'électrode par la relation des signaux de commande d'entraînement de la position de référence (R) relativement à la position de fermeture (B), **caractérisé en ce qu'**en outre, une flexion spécifique à la pince sous charge avec le couple de calibrage est déterminée et est prise en compte pour la localisation de l'électrode.

2. Procédé selon la revendication 1, **caractérisé en ce que**, pour déterminer la flexion, l'espacement d'électrodes (Z) est mesuré dans une position d'électrode non chargée et est pris en compte pour l'adaptation des signaux de commande.

3. Procédé selon la revendication 1 ou 2, **caractérisé en ce qu'**en outre, une épaisseur de pièce (W) en tant qu'épaisseur globale de deux parties de pièce (8a, 8b) reposant l'une sur l'autre directement sans fente d'aération est déterminée et prédéfinie.

4. Procédé selon l'une quelconque des revendications 1 à 3, **caractérisé par** l'utilisation d'une pince à souder pour établir des liaisons de points de soudage sur des pièces (8), comprenant une électrode de travail (2) et une contre-électrode (4), l'électrode de travail (2) pouvant être déplacée au moyen d'une course de travail en direction de la contre-électrode (4) et vers une pièce (8) et pouvant être sollicitée avec une force de pression théorique ($F_{soll}$) en cas de contact avec la pièce, un entraînement électrique étant prévu pour l'entraînement de l'électrode de travail (2) et pour la sollicitation avec la force de pression, des moyens pour l'entrée et pour le stockage d'une épaisseur de pièce (W) prédéfinie et pour un espacement d'électrodes (Z) mesuré dans un état non chargé ainsi que des moyens pour la localisation précise de l'électrode de travail (2) étant prévus.

5. Procédé selon la revendication 4,
   **caractérisé en ce que** la pince à souder utilisée présente une commande avec un dispositif pour mesurer la vitesse de translation de l'électrode de travail (2) pendant le déplacement de course, un dispositif pour mesurer le courant électrique de l'entraînement électrique, des moyens d'enregistrement pour enregistrer des modifications du courant par rapport à un courant de translation spécifique à une vitesse de translation théorique définie de façon quelconque du déplacement de course et une unité d'analyse pour l'adaptation du courant de travail en fonction des modifications enregistrées.

FIG. 1

a)

b)

FIG. 2

FIG. 3

FIG. 4

FIG.5

8
8a
8b
W

FIG.6

2
U
>W
10
4

FIG.7

2
$F_{soll}$
8a
8
8b
10
>W
4

FIG.8

$F_G$
$F_{soll}$
2
8a
$F_F$
$F_Z$
8
8b
W
4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1005943 A2
- EP 1428608 A1

- EP 1428608 B1